# EUROPÄISCHE PATENTSCHRIFT

(11) **EP 1 964 245 B1**
(45) Veröffentlichungstag und Bekanntmachung des Hinweises auf die Patenterteilung: **04.06.2014**
(21) Anmeldenummer: 06819911.6
(22) Anmeldetag: 06.12.2006
(51) Int. Cl.: H02K 3/52

(54) **STATORENDSCHEIBE FÜR EINEN KOMMUTATORMOTOR UND KOMMUTATORMOTOR**
STATOR END DISK FOR A COMMUTATOR MOTOR AND CORRESPONDING COMMUTATOR MOTOR
PLAQUE D'EXTRÉMITÉ DE STATOR POUR UN MOTEUR À COLLECTEUR ET MOTEUR À COLLECTEUR

(30) Priorität: 16.12.2005 DE 102005060358; 16.05.2006 DE 202006007808 U
(43) Veröffentlichungstag der Anmeldung: 03.09.2008
(73) Patentinhaber: BSH Bosch und Siemens Hausgeräte GmbH, 81739 München (DE)
(72) Erfinder: BINDER, Alfred, 72406 Bisingen (DE); IRCHA, Peter, 07237 Michalovce (SK); IVANAK, Martin, 04012 Kosice (SK); MURNIK, Jaroslav, 07101 Michalovce (SK)
(86) Internationale Anmeldenummer: PCT/EP2006/069371
(87) Internationale Veröffentlichungsnummer: WO 2007/068636

(56) Entgegenhaltungen:
- EP-A2- 0 469 426
- DE-A1- 3 534 883
- DE-A1- 3 604 939
- DE-A1- 3 632 646
- DE-A1- 4 321 540

## Beschreibung

Die Erfindung bezieht sich auf eine Statorendscheibe für einen Kommutatormotor, insbesondere einen Universalmotor, insbesondere zur Anwendung in einem Haushaltsgerät, mit einem Anschlussterminal, das Anschlusselemente zum Anschließen von Statorwicklungsdrähten und eine Steckerwanne mit Kontaktelementen zur Aufnahme und elektrischen Kontaktierung eines externen Motoranschlusssteckers aufweist, wobei jedes der Anschlusselemente mit je einem zugeordneten Kontaktelement elektrisch leitfähig verbunden ist, und auf einen Kommutatormotor mit einer solchen Statorendscheibe.

Eine solche Statorendscheibe ist bereits aus DE 43 21 540 C2 bekannt. Dort ist ein Elektromotor mit einer Statorendscheibe gezeigt, die zwei Anschlussgehäuse mit Kammern aufweist, welche diametral einander gegenüberliegend an dem äußeren Rand der freien Stirnfläche der Statorendscheibe angeordnet sind und in welche die Enden der Wicklungen eingeführt und befestigt sind. Ein solcher Elektromotor hat allerdings den Nachteil, dass für den externen Anschluss der Statorspulen zumindest zwei Motoranschlussstecker und für weitere interne, elektrische Bauelemente des Elektromotors zusätzliche externe Anschlüsse notwendig sind.

Die DE 35 34 883 A1 offenbart eine an einem Ständerblechpaket eines elektrischen Kleinmotors festlegbare Kunststoff-Verbindungsvorrichtung mit schlitzförmigen Führungsöffnungen zur Vorfixierung der Ständerwicklungsenden, die an in der Verbindungsvorrichtung gehaltene Steckkontaktglieder angeschlossen sind.

Der vorliegenden Erfindung liegt die Aufgabe zugrunde, einen kostengünstigen Kommutatormotor, insbesondere einen Universalmotor, insbesondere zur Anwendung in einem Haushaltsgerät, zur Verfügung zu stellen.

Gelöst wird die vorstehend aufgezeigte Aufgabe durch einen Kommutatormotor_mit den Merkmalen des Anspruchs 1. Vorteilhafte sowie bevorzugte Ausgestaltungen der Erfindung sind Gegenstand der abhängigen Ansprüche.

Bei einer Statorendscheibe der eingangs genannten Art, ist erfindungsgemäß an der Statorendscheibe lediglich ein Anschlussterminal angeordnet, wobei zur elektrischen Kontaktierung zumindest eines weiteren internen, elektrischen Bauelements des Kommutatormotors in der Steckerwanne zumindest ein dem Bauelement zugeordnetes weiteres Kontaktelement angeordnet ist. Dieses Bauelement kann eine Kohlebürste und/oder ein Thermowächter und/oder ein Tachometer sein. Auf diese Weise wird die Anzahl der notwendigen externen Anschlussstecker reduziert, wodurch diese Bauteile eingespart werden können.

Gemäß einer bevorzugten Ausführungsform sind für alle internen, elektrischen Bauelemente des Kommutatormotors in der Steckerwanne die notwendigen Kontaktelemente vorgesehen. Auf diese Weise ist für den externen Anschluss sowohl der Statorspulen wie auch aller weiteren internen, elektrischen Bauelemente des Kollektormotors nur ein einziges Anschlussterminal notwendig. Bevorzugt ist der externe Motoranschlussstecker ein Vielfachstecker und die Steckerwanne ist zur Aufnahme des Vielfachsteckers ausgebildet, so dass zum Anschluss sowohl der Statorspulen wie auch der internen, elektrischen Bauelemente nur ein einziger externer Anschlussstecker verwendet werden kann. Mit der gleichen Statorendscheibe können zudem unterschiedliche Motorvarianten ausgeführt werden, indem die Kontaktelemente unterschiedlich belegt werden. Da keine unterschiedlichen Statorendscheiben für die unterschiedlichen Motorvarianten vorrätig gehalten werden müssen, wird der Logistikaufwand zur Fertigung unterschiedlicher Motorvarianten reduziert, wodurch die Fertigungskosten insgesamt gesenkt werden können.

Vorzugsweise weist das Anschlussterminal zur Verbindung des Bauelements mit seinem zugeordneten Kontaktelement ein Anschlusselement zum Anschließen einer Verbindungsleitung auf. Durch die Verwendung von einer Verbindungsleitung, wie beispielsweise einem Einzeldraht oder einer Litzenleitung, kann das Bauelement leicht an dem Anschlusselement angeschlossen werden. Wenn ein lösbarer Anschluss vorgesehen wird, wie beispielsweise eine Steck- oder Lötverbindung, so kann das Bauelement bei Defekt oder Fehlfunktion leicht ausgetauscht werden. Für unterschiedliche Motorvarianten ist darüber hinaus eine unterschiedliche Nutzung der Anschlusselemente möglich.

In einer alternativen Ausführungsform ist zur Verbindung des Bauelements mit seinem zugeordneten Kontaktelement in die Statorendscheibe eine Verbindungsleitung eingebettet, insbesondere eingespritzt ist. Diese Verbindungsleitung ist vorzugsweise in Form eines Stanzgitters ausgebildet. Auf diese Weise ist ein Anschluss des internen Bauelements nicht an die Position etwaiger Anschlusselemente des Anschlussterminals gebunden, da das Bauelement an die eingespritzten Verbindungsleitung bzw. an das Stanzgitter an einer anderen Stelle der Statorendscheibe angeschlossen werden kann.

Vorzugsweise weist die Statorendscheibe eine Aufnahme für einen Thermowächter als Thermoschalter im Ankerkreis und/oder eine Halterung für einen Thermowächter als Temperatursensor im Luftspalt zwischen Rotor und Stator auf. Vorzugsweise sind diese beide Möglichkeiten bei der universell einsetzbaren Statorendscheibe bereits vorgesehen und eine entsprechende Halterung bzw. Aufnahme ausgebildet, so dass die Verwendung der gleichen Statorendscheibe sowohl für Motorvarianten mit Thermoschalter im Ankerkreis wie auch für Motorvarianten mit Temperatursensor möglich ist.

Gemäß einer bevorzugten Ausführungsform ist das Anschlussterminal an der Statorendscheibe angeformt. Insbesondere sind beide aus Kunststoff gefertigt, wobei das Anschlussterminal vorzugsweise einteilig an der Statorendscheibe angeformt ist. Dadurch sind keine Montageschritte nötig, um das Anschlussterminal mit der Statorendscheibe zu verbinden. Zudem kann die Statorendscheibe mit dem Anschlussterminal besonders einfach durch ein Spritzgussverfahren hergestellt werden.

In einer bevorzugten Weiterbildung der Erfindung sind an der Statorendscheibe an den Positionen der Statorpole Wicklungsstützteile zur Halterung der Polspulen einteilig angeformt. Auf diese Weise können die Positionen der Statorwicklungen bereits beim Wickeln in der Wickelmaschine in Bezug auf die Motorachse festgelegt und gegen Verrutschen in radialer Richtung gesichert werden, so dass eine nachträgliche, manuelle Fixierung der Statorwicklungen im Bereich der Wickelköpfe durch beispielsweise Kabelbinder entfallen kann.

Die Anschlusselemente des Anschlussterminals können unterschiedlich ausgebildet sein. Insbesondere ist zumindest eines der Anschlusselemente als Flachstecker oder Schneidklemmverbindung oder Schweißhaken ausgebildet. Vorzugsweise sind die Anschlusselemente zum Anschließen von Statorwicklungsdrähten als Schweißhaken ausgebildet und/oder das Anschlusselement zum Anschließen des Bauelements als Flachstecker. Auf diese Weise können die Statorwicklungsdrähte, d.h. sowohl die Spulenenden, wie auch eventuelle Wicklungsanzapfungen, bereits in der Wickelmaschine an den Schweißhaken festgelegt und dann mit den Schweißhaken automatisch verschweißt werden. Das interne, elektrische Bauelement des Kommutatormotors wird durch eine bzw. mehrere Steckverbindungen an den entsprechenden Flachsteckern des Anschlussterminals angeschlossen. Dies kann entweder manuell oder auch automatisch geschehen. Aufgrund der lösbaren Steckverbindung, ist das Bauelemente im Bedarfsfall auswechselbar.

Gemäß einer bevorzugten Ausführungsform ist jedes der Anschlusselemente mit seinem jeweils zugeordneten Kontaktelement in Form von einem metallischen Einleger ausgebildet. Dies hat den Vorteil, dass das Anschlussterminal der Statorendscheibe je nach Motorvariante mit einer unterschiedlichen Anzahl bzw. unterschiedlich geformten Einlegern bestückt werden kann. Vorzugsweise ist der Einleger derart ausgebildet, dass das Anschlusselement in Form einer Anschlussfahne mit seinem zugeordneten Kontaktelement in Form eines Kontaktstifts über eine metallische Brücke verbunden ist. Insbesondere ist der Einleger aus einem Metallblech geformt, wodurch er besonders einfach, beispielsweise durch Stanzen und Biegen, hergestellt werden kann.

Die Einleger können in das Anschlussterminal eingebettet, insbesondere eingespritzt sein, wodurch eine automatische Bestückung des Anschlussterminals mit den Einlegern möglich ist. Durch ein Spritzgussverfahren kann die Statorendscheibe mit dem angeformten und bereits mit den Einlegern bestückten Anschlussterminal in einem Arbeitsschritt hergestellt werden.

Vorzugsweise ist das Anschlussterminal zur Bestückung mit den Einlegern zweiteilig ausgebildet, und die zwei Teile sind durch Rastelemente miteinander verrastbar und/oder miteinander verklebbar. Auf diese Weise ist eine unterschiedliche Bestückung des Anschlussterminals mit einer unterschiedlichen Anzahl bzw. unterschiedlich geformten Einlegern für unterschiedliche Motorvarianten besonders leicht möglich. Insbesondere können auch Aufnahmen des Anschlussterminals für die Einleger unbestückt bleiben, wenn diese für die entsprechende Motorvariante nicht erforderlich sind.

In einer bevorzugten Weiterbildung der Erfindung erstreckt sich das Kontaktelement in Bezug auf die Statorendscheibe sowohl auf die Seite des Anschlusselements wie auch auf die dem Anschlusselement abgewandte Seite. Dadurch ist es möglich, den externen Motoranschluss alternativ von der A-Seite oder der B-Seite des Kommutatormotors auszuführen, so dass je nach Einbaubedingungen des Kommutatormotors in einem Gerät der externe Motoranschluss von der günstigeren der beiden Seiten aus erfolgen kann. Insbesondere ist sowohl auf der dem Statorblechpaket abgewandten Stirnseite der Statorendscheibe wie auch auf der dem Statorblechpaket zugewandten Seite der Statorendscheibe an dem Anschlussterminal je eine Steckerwanne zur alternativen Aufnahme des externen Motoranschlusssteckers ausgebildet. Dadurch kann der Motoranschlussstecker auf einfache Weise in die günstigere der beiden möglichen Positionen eingesteckt werden. Insbesondere ist zumindest eine der Steckerwanne mit einem Verschlussdeckel verschließbar. Vorzugsweise sind an den Steckerwannen Rastelemente zur Verrastung mit dem Verschlussdeckel zur Abdeckung der ungenutzten Steckerwanne angeformt oder der Verschlussdeckel sitzt auf der jeweils ungenutzten Steckerwanne im Presssitz, so dass die Kontaktelemente der ungenutzten Steckerwanne durch den Verschlussdeckel gegenüber ungewollter Kontaktierung gesichert sind.

Die erfindungsgemäße Statorendscheibe kann derart ausgebildet sein, dass die Konturen ihrer Auflagefläche zur Auflage auf dem Statorblechpaket weitestgehend analog zu dem Blechschnitt der Stirnfläche des Statorblechpakets geformt sind, so dass durch die Statorendscheibe der Aufnahmeraum für den Rotor ringförmig umfasst wird. Im Gegensatz dazu kann gemäß einer vereinfachten Ausführungsform die Statorendscheibe auch derart ausgebildet sein, dass sie lediglich einen Teilbereich der Stirnfläche des Statorblechpakets überdeckt. Insbesondere kann die Statorendscheibe auch lediglich auf den im Bereich einer Pollücke verlaufenden Teil des Statorblechpakets beschränkt sein.

Die erfindungsgemäße Statorendscheibe wird bei Kommutatormotoren eingesetzt, insbesondere bei Universalmotoren bzw. Reihenschlussmotoren für Haushaltsgeräte, wie beispielsweise bei Antriebsmotoren für Waschmaschinen oder Wäschetrocknern oder bei Gebläsemotoren für Staubsauger.

Es wird darauf hingewiesen, dass die technischen Lehren gemäß den_Merkmalen der Unteransprüche ohne Abweichung von der erfindungsgemäßen Idee in beliebiger Weise miteinander und mit den Merkmalen des bzw. der unabhängigen Ansprüche kombiniert als hiermit offenbart gelten.

Ausführungsbeispiele der Erfindung werden nachstehend anhand der Zeichnung näher erläutert.
- Fig. 1: zeigt eine Explosionsdarstellung von Statorbauteilen eines Kommutatormotors,
- Fig. 2a,2b: zeigen eine Explosionsdarstellung der Statorendscheibe gemäß Figur 1 von schräg oben bzw. schräg unten,
- Fig. 3: zeigt die Statorendscheibe gemäß Figur 1 im komplettierten Zustand mit Thermowächter,
- Fig. 4: zeigt eine Draufsicht auf die Stirnfläche des Stators gemäß Figur 1 mit Statorendscheibe und Polspulen,
- Fig. 5: zeigt eine Explosionsdarstellung einer alternativen Ausführungsform der Statorendscheibe,
- Fig. 6: zeigt eine Draufsicht auf die Stirnfläche .des Stators mit der Statorendschreibe gemäß Figur 5 und mit Polspulen.

Bevor auf die Zeichnungen näher eingegangen wird, sei angemerkt, dass einander entsprechende oder gleiche Elemente bzw. Einzelteile der Statorendscheibe bzw. des Kommutatormotors in sämtlichen Zeichnungsfiguren durch gleiche Bezugszeichen bezeichnet sind.

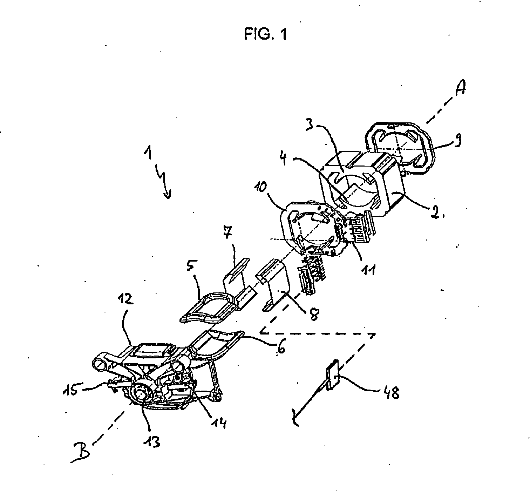

In Fig. 1 ist eine Explosionsdarstellung von Statorbauteilen eines zweipoligen Universalmotors 1 gezeigt. Der Universalmotor 1 weist ein Statorbleckpaket 2 mit einem ausgeprägten ersten Statorpol 3 zur Aufnahme einer ersten Polspule 5 und einem dem ersten Statorpol 3 gegenüberliegenden, ausgeprägten zweiten Statorpol 4 zur Aufnahme einer zweiten Polspule 6 auf. Zur elektrischen Isolierung der beiden Polspulen 5, 6 gegenüber dem metallischen Statorblechpaket 2 sind Isolationsformteile 7, 8 zum Einschieben in axialer Richtung in die Wicklungsnuten des Statorblechpakets 2, sowie eine A-seitige Statorendscheibe 9 und eine B-seitige Statorendscheibe 10 zur Isolierung der gegenüberliegenden Stirnflächen des Statorblechpakets 2 vorgesehen. Die B-seitige Statorendscheibe 10 weist im Gegensatz zur A-seitigen Statorendscheibe 9 zusätzlich ein Anschlussterminal 11 auf. Des weiteren ist das B-seitige Lagerschild 12 gezeigt, dass den Stator B-seitig abschließt und in dem die Rotorwelle (nicht gezeigt) mit ihrem B-seitigem Ende drehbar gelagert wird. In dem Lagerschild 12 ist im Bereich der zentralen Rotorwellenaufnahme ein Tachometer 13 zur Bestimmung der Rotorgeschwingigkeit angeordnet. Zur elektrischen Kontaktierung des Kommutators (nicht gezeigt) und damit der Rotorwicklungen sind an der Außenseite des Lagerschilds 12 ein erster Kohlebürstenhalter 14 mit einer ersten zugehörigen Kohlebürste und dem ersten Kohlebürstenhalter 14 diametral gegenüberliegend ein zweiter Kohlenbürstenhalter 15 mit einer zweiten zugehörigen Kohlebürste angebracht.

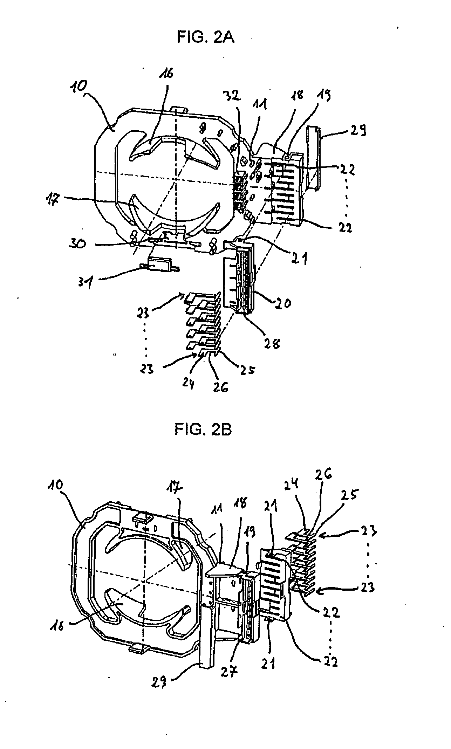

Die B-seitige Statorendscheibe 10 gemäß Figur 1 ist mit ihren einzelnen Bauteilen in Figur 2a in einer schrägen Draufsicht auf ihre dem Statorblechpaket 2 abgewandte Seite und in Figur 2b in einer schrägen Draufsicht auf ihre dem Statorblechpaket 2 zugewandte Seite gezeigt. An der B-seitigen Statorendscheibe 10 sind an der Position der ersten Statorpols 3 ein erstes Wicklungsstützteil 16 zur Halterung der Wicklungen der ersten Polspule 5 und an der Position der zweiten Statorpols 4 ein zweites Wicklungsstützteil 17 zur Halterung der Wicklungen der zweiten Polspule 6 angeformt. Des weiteren ist an der B-seitigen Statorendscheibe 10 im Bereich zwischen dem ersten und dem zweiten Wicklungsstützteil 16, 17 am äußeren Rand der B-seitigen Statorendscheibe 10 das Anschlussterminal 11 angeformt. Das Anschlussterminal 11 weist einen ersten Teil 18 auf, der einstückig mit der Statorendscheibe ausgebildet ist und an dem Rastnasen 19 angeformt sind. Zusätzlich weist das Anschlussterminal 11 einen zweiten Teil 20 auf, an dem Rastösen 21 angeformt sind und der mittels der Rastösen 21 und der Rastnasen 19 mit dem ersten Teil 18 verrastet werden kann. In dem ersten Teil 18 und in dem zweiten Teil 20 des Anschlussterminals 11 sind jeweils zehn Aufnahmen 22 für aus Metallblech geformte Einleger 23 ausgebildet. Die Einleger 23 weisen jeweils eine Anschlussfahne 24 und einen Kontaktstift 25 auf, wobei die Anschlussfahne 24 und der Kontaktstift 25 über eine metallische Brücke 26 miteinander verbunden sind. Des weiteren ist an dem ersten Teil 18 des Anschlussterminals 11 eine A-seitige Steckerwanne 27 und an dem zweiten Teil 20 des Anschlussterminals 11 eine B-seitige Steckerwanne 28 ausgebildet. Es ist alternativ auch möglich, den zweiten Teil 20 mit der B-seitigen Steckerwanne 28 einteilig an dem Anschlussterminal 11 und damit an der Statorendscheibe 10 anzuformen und den ersten Teil 18 mit der A-seitigen Steckerwanne 27 als lösbares bzw. verrastbares Teil auszubilden. Bei in den Aufnahmen 22 eingelegten Einlegern 23 und miteinander verrastetem ersten Teil 18 und zweiten Teil 20 des Anschlussterminals 11 erstrecken sich die Kontaktstifte 25 der Einleger 23 sowohl in die A-seitige Steckerwanne 27 wie auch in die B-seitige Steckerwanne 28, so dass ein externer Motoranschlussstecker 48 entweder in die A-seitige Steckerwanne 27 oder in die B-seitige Steckerwanne 28 eingesteckt werden kann. Um die Kontaktstifte 25 der jeweils ungenutzten Steckerwanne 27 oder 28 gegenüber ungewollter Kontaktierung zu sichern, ist ein Verschlussdeckel 29 vorgesehen, der im Presssitz die ungenutzte Steckerwanne 27 oder 28 verschließen kann.

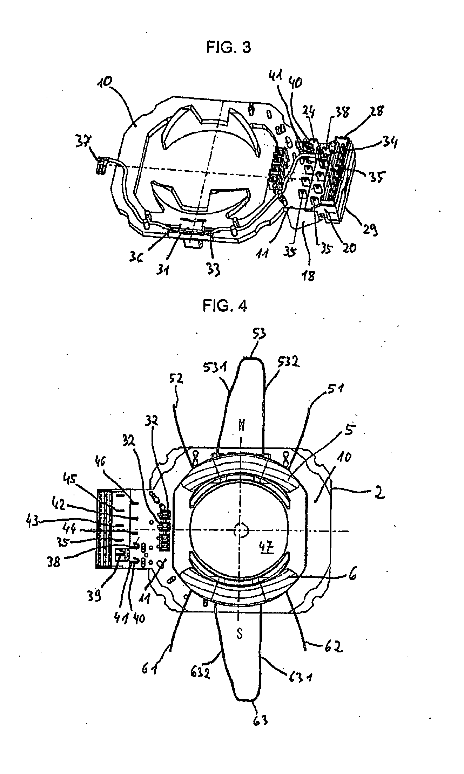

An der B-seitigen Statorendscheibe 10 ist weiterhin eine Aufnahme 30 für einen Thermoschalter 31 im Ankerkreis ausgebildet. Um auch für alternative Motorvarianten eine Anordnung eines Temperatursensors im Luftspalt zwischen Statorblechpaket 2 und Rotor 47 zu ermöglichen, sind an der B-seitigen Statorendscheibe 10 zusätzlich Halterungen 32 für den Temperatursensor bzw. für dessen Anschlussdrähte angeformt. In Figur 3 ist die B-seitige Statorendscheibe 10 mit komplettiertem Anschlussterminal 11 gezeigt, also mit eingelegten Einlegern 23 und miteinander verrastetem ersten Teil 18 und zweiten Teil 20. Die B-seitige Steckerwanne 28 ist für die Aufnahme eines externen Anschlusssteckers vorgesehen, die ungenutzte A-seitige Steckerwanne 27 ist mit dem Verschlussdeckel 29 verschlossen. Es ist möglich den zweiten Teil 20 des Anschlussterminals 11 für unterschiedliche Motorvarianten mit unterschiedlichen B-seitigen Steckerwannen 28 auszubilden, so dass sie zur Aufnahme von unterschiedlichen, z.B. sechspoligen, achtpolig oder zehnpoligen Vielfachsteckern ausgebildet ist. Eine Änderung des ersten Teils 18 des Anschlussterminals 11 und damit der Statorendscheibe 10 ist in diesem Fall nicht nötig, da lediglich das Anschlussterminal 11 mit einer geringeren Anzahl an Einlegern 23 und damit einer geringeren Anzahl an Anschlusselementen 24 bzw. Kontaktelementen 25 bestückt zu werden braucht. Für den Fall, dass unterschiedliche Motorvarianten mit einer Vielzahl von verschiedenen A-seitigen Steckerwannen 27 zur Aufnahme von verschiedenen externen Motoranschlusssteckern 48 auszustatten sind, ist es vorteilhaft - wie weiter oben bereits erwähnt - den zweiten Teil 20 an der Statorendscheibe 10 einstückig anzuformen und den ersten Teil 18 des Anschlussterminals 11 mit der A-seitigen Steckerwanne 27 als separates Bauteil mit dem zweiten Teil 20 des Anschlussterminals 11 zu verbinden.

In der in Figur 3 gezeigten B-seitige Statorendscheibe 10 ist in die Aufnahme für den Thermoschalter 30 bereits ein Thermoschalter 31 eingefügt. Der Thermoschalter 31 ist über eine erste Verbindungsleitung 33, die an ihrem dem Thermoschalter 31 abgewandten Ende in einer Flachsteckerhülse 34 endet, an einer der Anschlussfahnen 24 angeschlossen, die als Flachstecker 35 ausgebildet ist. Der Thermoschalter 31 weist eine zweite Verbindungsleitung 36 auf, die an ihrem dem Thermoschalter 31 abgewandten Ende in einer zweiten Flachsteckerhülse 37 endet. Die zweite Flachsteckerhülse 37 ist zur elektrischen Kontaktierung der in dem zweiten Kohlebürstenhalter 15 gemäß Figur 1 gehalterten zweiten Kohlebürste vorgesehen ausgebildet. Auf diese Weise ist die B-seitige Statorendscheibe 10 bereits vor dem Bewickeln des Statorblechpakets 2 mit den Polspulen 5, 6 mit dem Thermoschalter 31 für den Ankerkreis vorkonfektioniert. Es ist in einer alternativen Ausführungsform auch möglich die B-seitige Statorendscheibe 10 mit integrierter ersten Verbindungsleitung 33 und integrierter zweiten Verbindungsleitung 36 herzustellen. Dies kann beispielsweise in Form eines Stanzgitters erfolgen, das in einem Spritzgussverfahren in einem Spritzgusswerkzeug zur Herstellung der Statorendscheibe 10 mit umspritzt wird. In diesem Fall wird die elektrische Verbindung zwischen dem Thermoschalter 31 und dem Stanzgitter (nicht gezeigt) durch Einfügen des Thermoschalters 31 in die Aufnahme 30 der Statorendscheibe 10 hergestellt.

In Figur 4 ist eine Draufsicht auf die Stirnfläche des Statorblechpakets 2 gemäß Figur 1 mit B-seitiger Statorendscheibe 10 gezeigt, das mit erster Polspule 5 und mit zweiter Polspule 6 bewickelt ist. Für einen Anschluss von Wicklungsdrähten der ersten und zweiten Polspulen 5, 6 sind gemäß Figur 3 und Figur 4 drei Anschlussfahnen 24 des Anschlussterminals 11 in Form eines ersten Schweißhakens 38, eines zweiten Schweißhakens 39 und eines dritten Schweißhakens 40 ausgebildet. Die Wicklungen der ersten Polspule 5 weisen einen Spulenanfang 51 und ein Spulenende 52, sowie eine Spulenanzapfung 53 auf. Analog dazu weisen die Wicklungen der zweiten Polspule 6 ebenfalls einen Spulenanfang 61, ein Spulenende 62 und eine Spulenanzapfung 63 auf. Der Spulenanfang 51 der ersten Polspule 5 wird zusammen mit dem Spulenende 62 der zweiten Polspule 6 beim Wickelvorgang an dem ersten Schweißhaken 38 festgelegt und mit diesem verschweißt. Das Spulenende 52 der ersten Polspule 5 wird zusammen mit dem Spulenanfang 61 der zweiten Polspule 6 beim Wickelvorgang an dem zweiten Schweißhaken 39 festgelegt und mit diesem verschweißt. Des weiteren wird die Spulenanzapfung 53 der ersten Polspule 5 zusammen mit der Spulenanzapfung 63 der zweiten Polspule 6 beim Wickelvorgang an dem dritten Schweißhaken 40 festgelegt und mit diesem verschweißt.

Es sind allerdings auch andere Verbindungen der Spulendrähte der ersten Polspule 5 und der zweiten Polspule 6 möglich. Beispielsweise wird in einer zweiten Ausführungsform die Spulenanzapfung 63 der zweiten Polspule 6 aufgetrennt, so dass die zweite Polspule 63 einen zweiten Spulenanfang 631 und ein zweites Spulenende 632 aufweist. Gemäß dieser zweiten Ausführungsform wird nun der Spulenanfang 51 der ersten Polspule 5 zusammen mit dem zweiten Spulenanfang 631 der zweiten Polspule 6 an dem ersten Schweißhaken 38 festgelegt und mit diesem verschweißt. Des weiteren wird gemäß dieser zweiten Ausführungsform das Spulenende 52 der ersten Polspule 5 mit dem zweiten Spulenende 632 der zweiten Polspule 6 an dem zweiten Schweißhaken 39 festgelegt und mit diesem verschweißt. Letztlich wird gemäß der zweiten Ausführungsform der Spulenanfang 61 der zweiten Polspule 6, das Spulenende 62 der zweiten Polspule 6 und die Spulenanzapfung 53 der ersten Polspule 5 an dem dritten Schweißhaken 40 festgelegt und mit diesem verschweißt. Es ist auch möglich, dass an der Anschlussfahne 24 mit dem dritten Schweißhaken noch ein weiterer vierter Schweißhaken 41 angeformt ist. Somit kann auch die Spulenanzapfung 53 der ersten Polspule 5 aufgetrennt werden, so dass die erste Polspule 5 ebenfalls einen zweiten Spulenanfang 531 und ein zweites Spulenende 532 aufweist. Auf diese Weise kann dann der Spulenanfang 61 der zweiten Polspule 6 mit dem zweiten Spulenende 532 der ersten Polspule 5 an dem dritten Schweißhaken 40 festgelegt und verschweißt werden. Des weiteren kann dann das Spulenende 62 der zweiten Polspule 6 mit dem zweiten Spulenanfang 531 der ersten Polspule 5 an dem vierten Schweißhaken 41 festgelegt und verschweißt werden. Die Spulenanfänge 51, 61, die Spulenenden 52, 62 und die Spulenanzapfungen 53, 531, 531, 63, 631, 632 können auch anders miteinander kombiniert werden. Es ist auch eine alternative Motorvariante ohne Spulenanzapfungen 53, 63 möglich. Des weiteren können die Einleger 23 mit den Schweißhaken 38, 39, 40 bzw. 41 an verschiedenen Positionen in den Aufnahmen 22 des Anschlussterminals 11 angeordnet werden.

Für den Anschluss des Tachometers 13 sind in dem Anschlussterminal 11 zwei Anschlussfahnen 24 in Form eines ersten Flachsteckers 42 und eines zweiten Flachsteckers 43 ausgebildet. Für den Anschluss der ersten Verbindungsleitung 33 des Thermoschalters 31 ist - wie oben bereits erwähnt - der Flachstecker 35 vorgesehen. Für den Anschluss der ersten Kohlebürste des ersten Kohlebürstenhalters 14 ist in dem Anschlussterminal 11 eine weitere Anschlussfahne 24 als Flachstecker 44 ausgebildet. Bei einer Motorvariante ohne Thermoschalter 31 kann an den Flachstecker 35 die zweite Kohlebürste des zweiten Kohlebürstenhalters 15 direkt angeschlossen werden. Ist bei einer weiteren Motorvariante, bei der anstelle des Thermoschalters 31 ein Temperatursensor (nicht gezeigt) in die Halterungen 32 eingesetzt wird, sind für den Anschluss dieses Temperatursensors in dem Anschlussterminal 11 zwei weitere Anschlussfahnen 24 in Form eines ersten Flachsteckers 45 und eines zweiten Flachsteckers 46 ausgebildet. Auch hier kann analog zu den Schweißhaken 38, 39, 40, 41 die Belegung der Flachstecker 35, 42, 43, 44, 45, 46 bzw. ihre Position in den Aufnahmen 22 des Anschlussterminals 11 variiert werden. Des weiteren ist es möglich die Anschlusselemente des Anschlussterminals 11 anstatt als Flachstecker 35, 42, 43, 44, 45, 46 oder als Anschlussfahnen mit Schweißhaken 38, 39, 40, 41 auch als Lötfahnen oder als Schneidklemmverbindungen auszubilden.

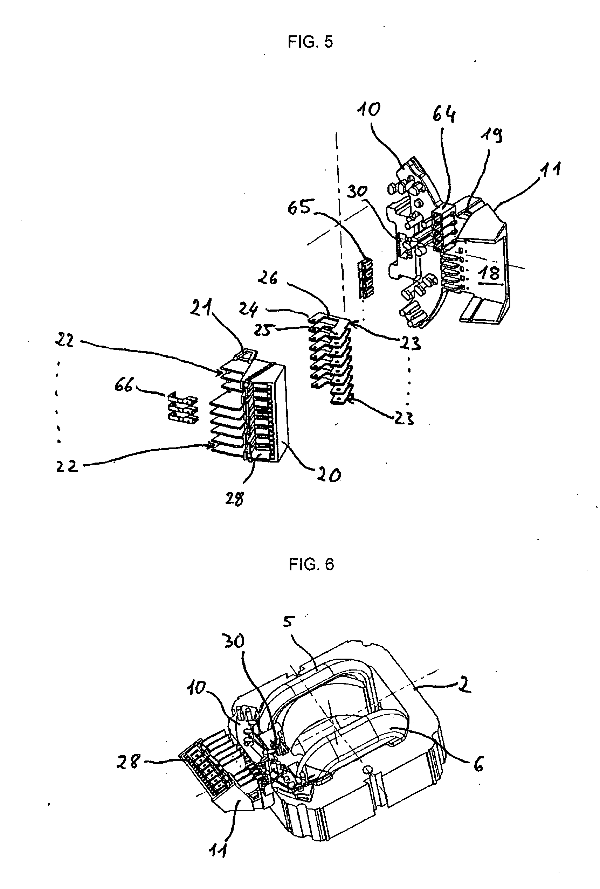

In Figur 5 ist eine alternative Ausführungsform der B-seitigen Statorendscheibe 10 mit ihren einzelnen Bauteilen in einer schrägen Draufsicht auf ihre dem Statorblechpaket 2 abgewandte Seite gezeigt. Figur 6 zeigt eine Draufsicht auf die Stirnfläche des Stators mit der Statorendschreibe 10 gemäß Figur 5 und mit Polspulen 5, 6. Im Gegensatz zu der Ausführungsform gemäß Figur 1 bis 4 ist die hier gezeigte B-seitige Statorendscheibe insofern vereinfacht ausgebildet, da sie lediglich einen Teilbereich der Stirnfläche des Statorblechpakets 2 im Bereich einer der beiden Pollücken überdeckt und da auf Wicklungsstützteile verzichtet wurde. Am äußeren, dem Rotor abgewandten Rand der B-seitigen Statorendscheibe 10 ist wiederum das Anschlussterminal 11 angeformt. Das Anschlussterminal 11 weist analog zu der Ausführungsform gemäß Figur 1 bis 4 einen ersten Teil 18 auf, der einstückig mit der Statorendscheibe ausgebildet ist und an dem Rastnasen 19 angeformt sind. Ebenso weist das Anschlussterminal 11 einen zweiten Teil 20 auf, an dem Rastösen 21 angeformt sind und der mittels der Rastösen 21 und der Rastnasen 19 mit dem ersten Teil 18 verrastet werden kann. In dem zweiten Teil 20 des Anschlussterminals 11 sind acht Aufnahmen 22 für aus Metallblech geformte Einleger 23 ausgebildet. Die Einleger 23 weisen jeweils eine Anschlussfahne 24 und einen Kontakt 25 auf, wobei die Anschlussfahne 24 und der Kontakt 25 über eine metallische Brücke 26 miteinander verbunden sind. Des weiteren sind an dem ersten Teil 18 des Anschlussterminals 11 anstelle von Schweißhaken vier Kammern 64 zur Aufnahme von metallischen Schneidklemmkontakten 65 für Schneidklemmverbindungen der Statorwicklungen einstückig angeformt. Für die Verbindung der Schneidklemmkontakte 65 mit Anschlussfahnen 24 der Einleger 23 sind des weiteren metallische Steckkontakte 66 vorgesehen. Die Aufnahme 30 für den Thermoschalter 31 im Ankerkreis oder den Temperatursensor ist am inneren, dem Rotor zugewandten Rand der B-seitigen Statorendscheibe 10 gegenüberliegend zu dem Anschlussterminal 11 im Luftspalt zwischen Statorblechpaket 2 und Rotor 47 angeordnet. Der Thermoschalter 31 bzw. der Temperatursensor kann analog zur Ausführungsform gemäß Figur 3 mittels Flachsteckerhülsen an Anschlussfahnen 24 des Anschlussterminals 11 angeschlossen werden.

Im Gegensatz zu der Ausführungsform gemäß Figur 1 bis 4 ist in der alternativen Ausführungsform gemäß Figur 5 und Figur 6 an dem ersten Teil 18 des Anschlussterminals 11 keine A-seitige Steckerwanne 27 ausgebildet. Lediglich das zweite Teil 20 des Anschlussterminals 11 weist eine B-seitige Steckerwanne 28 auf. Es sind allerdings auch alle anderen Varianten möglich, d.h. beispielsweise nur eine A-seitige Steckerwanne 27 und keine B-seitige Steckerwanne 28 oder sowohl eine A-seitige Steckerwanne 27 wie auch eine B-seitige Steckerwanne 28.

### Bezugszeichenliste

- 1: Kommutatormotor
- 2: Statorblechpaket
- 3: erster Statorpol
- 4: zweiter Statorpol
- 5: erste Polspule
- 6: zweite Polspule
- 7: Isolationsformteil
- 8: Isolationsformteil
- 9: A-seitige Statorendscheibe
- 10: B-seitige Statorendscheibe
- 11: Anschlussterminal
- 12: B-seitiges Lagerschild
- 13: Tachometer
- 14: erster Kohlebürstenhalter
- 15: zweiter Kohlebürstenhalter
- 16: erstes Wicklungsstützteil
- 17: zweites Wicklungsstützteil
- 18: erster Teil des Anschlussterminals
- 19: Rastnase
- 20: zweiter Teil des Anschlussterminals
- 21: Rastöse
- 22: Aufnahme für Einleger
- 23: Einleger
- 24: Anschlussfahne
- 25: Kontaktstift
- 26: Brücke
- 27: A-seitige Steckerwanne
- 28: B-seitige Steckerwanne
- 29: Verschlussdeckel
- 30: Aufnahme für Thermoschalter
- 31: Thermoschalter
- 32: Halterung für Temperatursensor
- 33: erste Verbindungsleitung
- 34: erste Flachsteckerhülse
- 35: Flachstecker zum Anschluss der Thermoschalters oder der zweiten Kohlebürste
- 36: zweite Verbindungsleitung
- 37: zweite Flachsteckerhülse
- 38: erster Schweißhaken
- 39: zweiter Schweißhaken
- 40: dritter Schweißhaken
- 41: vierter Schweißhaken
- 42: erster Flachstecker zum Anschluss des Tachometers
- 43: zweiter Flachstecker zum Anschluss des Tachometers
- 44: Flachstecker zum Anschluss der ersten Kohlebürste
- 45: erster Flachstecker zum Anschluss des Temperatursensors
- 46: zweiter Flachstecker zum Anschluss des Temperatursensors
- 47: Rotor
- 48: externer Motoranschlussstecker
- 51: Spulenanfang der ersten Polspule
- 52: Spulenende der ersten Polspule
- 53: Spulenanzapfung der ersten Polspule
- 531: zweiter Spulenanfang der ersten Polspule
- 532: zweites Spulenende der ersten Polspule
- 61: Spulenanfang der zweiten Polspule
- 62: Spulenende der zweiten Polspule
- 63: Spulenanzapfung der zweiten Polspule
- 631: zweiter Spulenanfang der zweiten Polspule
- 632: zweites Spulenende der zweiten Polspule
- 64: Kammer für Schneidklemmkontakt
- 65: Schneidklemmkontakt
- 66: Steckkontakt

## Patentansprüche

1. Kommutatormotor aufweisend eine Statorendscheibe für ein Statorblechpaket (2) des Kommutatormotors (1), insbesondere eines Universalmotors, insbesondere zur Anwendung in einem Haushaltsgerät, mit einem Anschlussterminal (11), das Anschlusselemente (24, 38, 39, 40, 41) zum Anschließen von Statorwicklungsdrähten (51, 52, 53, 531, 532, 61, 62, 63, 631, 632) und eine Steckerwanne (27, 28) mit Kontaktelementen (25) zur Aufnahme und elektrischen Kontaktierung eines externen Motoranschlusssteckers (48) aufweist, wobei jedes der Anschlusselemente (24, 38, 39, 40, 41) mit je einem zugeordneten Kontaktelement (25) elektrisch leitfähig verbunden ist, **dadurch gekennzeichnet, dass** an der Statorendscheibe (10) lediglich ein Anschlussterminal (11) angeordnet ist, und dass zur elektrischen Kontaktierung zumindest eines weiteren internen, elektrischen Bauelements (13, 14, 15, 31) des Kommutatormotors (1) in der Steckerwanne (27, 28) zumindest ein dem Bauelement.(13, 14, 15, 31) zugeordnetes weiteres Kontaktelement (25) angeordnet ist.

2. Kommutatormotor nach Anspruch 1, **dadurch gekennzeichnet, dass** als Bauelement eine Kohlebürste (14, 15) und/oder ein Thermowächter (31) und/oder ein Tachometer (13) vorgesehen ist.

3. Kommutatormotor nach Anspruch 1 oder 2, **dadurch gekennzeichnet, dass** für alle internen, elektrischen Bauelemente (13, 14, 15, 31) des Kommutatormotors (1) in der Steckerwanne (27, 28) Kontaktelemente (25) angeordnet sind.

4. Kommutatormotor nach einem der vorhergehenden Ansprüche, **dadurch gekennzeichnet, dass** der externe Motoranschlussstecker (48) ein Vielfachstecker ist, und dass die Steckerwanne (27, 28) zur Aufnahme des Vielfachsteckers ausgebildet ist.

5. Kommutatormotor nach einem der Ansprüche 1 bis 4, **dadurch gekennzeichnet, dass** zur Verbindung des Bauelements (13, 14, 15, 31) mit seinem zugeordneten Kontaktelement (25) das Anschlussterminal (11) ein Anschlusselement (24, 35, 42, 43, 44, 45, 46) zum Anschließen einer Verbindungsleitung aufweist.

6. Kommutatormotor nach einem der Ansprüche 1 bis 4, **dadurch gekennzeichnet, dass** zur Verbindung des Bauelements (13, 14, 15, 31) mit seinem zugeordneten Kontaktelement (25) in die Statorendscheibe (10) eine Verbindungsleitung eingebettet ist.

7. Kommutatormotor nach Anspruch 6, **dadurch gekennzeichnet, dass** die Verbindungsleitung in Form eines Stanzgitters ausgebildet ist.

8. Kommutatormotor nach einem der vorhergehenden Ansprüche, **dadurch gekennzeichnet, dass** die Statorendscheibe (10) eine Aufnahme (30) für einen Thermowächter als Thermoschalter (31) im Ankerkreis und/oder eine Halterung (32) für einen Thermowächter als Temperatursensor im Luftspalt zwischen Rotor (47) und Statorblechpaket (2) aufweist.

9. Kommutatormotor nach einem der vorhergehenden Ansprüche, **dadurch gekennzeichnet, dass** das Anschlussterminal (11) an der Statorendscheibe (10) einteilig angeformt ist.

10. Kommutatormotor nach einem der vorhergehenden Ansprüche, **dadurch gekennzeichnet, dass** an der Statorendscheibe (10) an den Positionen der Statorpole (3, 4) Wicklungsstützteile (16, 17) zur Halterung der Polspulen (5, 6) einteilig angeformt sind.

11. Kommutatormotor nach einem der vorhergehenden Ansprüche, **dadurch gekennzeichnet, dass** zumindest eines der Anschlusselemente (24) als Flachstecker (35, 42, 43, 44, 45, 46) oder Schneidklemmverbindung oder Schweißhaken (38, 39, 40, 41) ausgebildet ist.

12. Kommutatormotor nach Anspruch 11, **dadurch gekennzeichnet, dass** die Anschlusselemente (24) zum Anschließen von Statorwicklungsdrähten (51, 52, 53, 531, 532, 61, 62, 63, 631, 632) als Schweißhaken (38, 39, 40, 41) und/oder dass das Anschlusselement (24) zum Anschließen des Bauelements (13, 14, 15, 31) als Flachstecker (35, 42, 43, 44, 45, 46) ausgebildet ist.

13. Kommutatormotor nach einem der vorhergehenden Ansprüche, **dadurch gekennzeichnet, dass** jedes der Anschlusselemente (24) mit seinem jeweils zugeordneten Kontaktelement (25) in Form von einem metallischen Einleger (23) ausgebildet ist.

14. Kommutatormotor nach Anspruch 13, **dadurch gekennzeichnet, dass** der Einleger (23) derart ausgebildet ist, dass das Anschlusselement in Form einer Anschlussfahne (24) mit seinem zugeordneten Kontaktelement in Form eines Kontaktstifts (25) über eine metallische Brücke (26) verbunden ist.

15. Kommutatormotor nach Anspruch 13 oder 14, **dadurch gekennzeichnet, dass** die Einleger (23) in das Anschlussterminal (11) eingebettet sind.

16. Kommutatormotor nach Anspruch 13 oder 14, **dadurch gekennzeichnet, dass** das Anschlussterminal (11) zur Bestückung mit den Einlegern (23) zweiteilig ausgebildet ist und dass die beiden Teile (18, 19) durch Rastelemente (20, 21) miteinander verrastbar und/oder miteinander verklebbar sind.

17. Kommutatormotor nach einem der vorhergehenden Ansprüche, **dadurch gekennzeichnet, dass** sich das Kontaktelement (25) in Bezug auf die Statorendscheibe (10) sowohl auf die Seite des Anschlusselements (24) wie auch auf die dem Anschlusselement (24) abgewandte Seite erstreckt.

18. Kommutatormotor nach Anspruch 17, **dadurch gekennzeichnet, dass** sowohl auf der dem Statorblechpaket (2) abgewandten Stirnseite der Statorendscheibe (10) wie auch auf der dem Statorblechpaket (2) zugewandten Seite der Statorendscheibe (10) an dem Anschlussterminal (11) je eine Steckerwanne (27, 28) zur alternativen Aufnahme des externen Motoranschlusssteckers (48) ausgebildet ist.

19. Kommutatormotor nach Anspruch 18, **dadurch gekennzeichnet, dass** zumindest eine der Steckerwannen (27, 28) mit einem Verschlussdeckel (29) verschließbar ist.

## Claims

1. Commutator motor having a stator end disc for a laminated stator core (2) of the commutator motor (1), especially of a universal motor, especially for use in a household appliance, with a connecting terminal (11) having connecting elements (24, 38, 39, 40, 41) for connection of stator winding wires (51, 52, 53, 531, 532, 61, 62, 63, 631, 632) and a plug connector tray (27, 28) with contact elements (25) for receiving and making electrical contact with an external motor connector plug (48), wherein each of the connection elements (24, 38, 39, 40, 41) is connected electrically conductively to an assigned contact element (25), **characterised in that** only one connecting terminal (11) is disposed on the stator end disc (10), and that for electrical contacting of at least one further internal, electrical component (13, 14, 15,31) of the commutator motor (1), at least one further contact element (25) assigned to the component (13, 14, 15, 31) is disposed in the plug connector tray (27, 28).

2. Commutator motor according to claim 1, **characterised in that** a carbon brush (14, 15) and/or a thermal sensor (31) and/or a tachometer (13) is provided as the component.

3. Commutator motor according to claim 1 or 2, **characterised in that** contact elements (25) are disposed in the plug connector tray (27, 28) for all internal electrical components (13, 14, 15, 31) of the commutator motor (1).

4. Commutator motor according to one of the preceding claims, **characterised in that** the external motor plug (48) is a multiway plug, and that the plug connector tray (27, 28) is embodied to accept the multiway plug.

5. Commutator motor according to one of claims 1 to 4, **characterised in that**, for connecting the component (13, 14, 15, 31) to its assigned connection element (25), the connecting terminal (11) has a connection element (24, 35, 42, 43, 44, 45, 46) for connection of a connecting line.

6. Commutator motor according to one of claims 1 to 4, **characterised in that**, for connecting the component (13, 14, 15, 31) to its assigned connection element (25), a connecting line is embedded in the stator end disc (10).

7. Commutator motor according to claim 6, **characterised in that** the connecting line is embodied in the form of a leadframe.

8. Commutator motor according to one of the preceding claims; **characterised in that** the stator end disc (10) has a receptacle (30) for a thermal sensor as thermal sensor (31) in the armature circuit and/or a holder (32) for a thermal sensor as temperature sensor in the air gap between rotor (47) and laminated stator core (2).

9. Commutator motor according to one of the preceding claims, **characterised in that** the connecting terminal (11) is moulded in one piece onto the stator end disc (10).

10. Commutator motor according to one of the preceding claims, **characterised in that** winding support parts (16, 17) for holding the pole coils (5, 6) are moulded in one piece on the stator end disc (10) at the positions of the stator poles (3, 4).

11. Commutator motor according to one of the preceding claims, **characterised in that** at least one of the connection elements (24) is embodied as a flat plug (35, 42, 43, 44, 45, 46) or insulation displacement connection or solder tag (38, 39, 40, 41).

12. Commutator motor according to claim 11, **characterised in that** the connection element (24) for connection of stator winding wires (51, 52, 53, 531; 532, 61, 62, 63, 631, 632) are embodied as solder tags (38, 39, 40, 41) and/or that the connection element (24) for connection of the component (13, 14, 15, 31) is embodied as a flat plug (35, 42, 43, 44, 45, 46).

13. Commutator motor according to one of the preceding claims, **characterised in that** each of the connection elements (24) with its respectively assigned contact element (25) is embodied in the form of a metallic inlay (23).

14. Commutator motor according to claim 13, **characterised in that** the inlay (23) is embodied such that the connection element in the form of a connecting tab (24) is connected to its assigned contact element in the form of a contact pin (25) via a metallic bridge (26).

15. Commutator motor according to claim 13 or 14, **characterised in that** the inlays (23) are embedded in the connecting terminal (11).

16. Commutator motor according to claim 13 or 14, **characterised in that** the connecting terminal (11) is embodied in two parts for equipping with the inlays (23) and that the two parts (18, 19) are able to be latched to each other by latching elements (20, 21) and/or are able to be glued to each other.

17. Commutator motor according to one of the preceding claims, **characterised in that** the contact element (25) in relation to the stator end disc (10), extends both on the connecting element (24) side and also on the side facing away from the connecting element (24).

18. Commutator motor according to claim 17, **characterised in that**, both on the end face side of the stator end disc (10) facing away from the laminated stator core (2) and also on the side of the stator end disc (10) facing towards the laminated stator core (2) a plug connector tray (27, 28) for alternate acceptance of the external motor connection plug (48) is embodied on the connecting terminal (11) in each instance.

19. Commutator motor according to claim 18, **characterised in that** at least one of the plug connector trays (27, 28) is able to be closed off with a closure cover (29).

## Revendications

1. Moteur à collecteur présentant un disque terminal de stator pour un empilage de tôles de stator (2) du moteur à collecteur (1), notamment d'un moteur universel, notamment pour l'utilisation dans un appareil ménager, comprenant un terminal de raccordement (11) qui présente des éléments de raccordement (24, 38, 39, 40, 41) destinés au raccordement de fils d'enroulements statoriques (51, 52, 53, 531, 532, 61, 62, 63 631, 632) et une coque de connecteur (27, 28) munie d'éléments de contact (25) pour le logement et la connexion électrique d'une fiche externe de connexion de moteur (48), chacun des éléments de raccordement (24, 38, 39, 40, 41) étant raccordé de manière électro-conductrice à respectivement un élément de contact correspondant (25), **caractérisé en ce que** seulement un terminal de raccordement (11) est disposé sur le disque terminal de stator (10), et **en ce que** pour la connexion électrique d'au moins un composant électrique interne supplémentaire (13, 14, 15, 31) du moteur à collecteur (1) au moins un élément de contact (25) supplémentaire attribué au composant (13, 14, 15, 31) est disposé dans la coque de connecteur (27, 28).

2. Moteur à collecteur selon la revendication 1, **caractérisé en ce qu'**un balai de charbon (14, 15) et/ou un thermo-contrôleur (31) et/ou un tachymètre (13) sont ménagés en tant que composant.

3. Moteur à collecteur selon la revendication 1 ou 2, **caractérisé en ce que** pour tous les composants électriques internes (13, 14, 15, 31) du moteur à collecteur (1) des éléments de contact (25) sont disposés dans la coque de connecteur (27, 28).

4. Moteur à collecteur selon l'une quelconque des revendications précédentes, **caractérisé en ce que** la fiche externe de connexion de moteur (48) est une fiche multiple et **en ce que** la coque de connecteur (27, 28) est réalisée pour le logement de la fiche multiple.

5. Moteur à collecteur selon l'une quelconque des revendications 1 à 4, **caractérisé en ce que** pour le raccordement du composant (13, 14, 15, 31) à son élément de contact correspondant (25), le terminal de raccordement (11) présente un élément de raccordement (24, 35, 42, 43, 44, 45, 46) pour le raccordement d'une ligne de connexion.

6. Moteur à collecteur selon l'une quelconque des revendications 1 à 4, **caractérisé en ce que** pour le raccordement du composant (13, 14, 15, 31) à son élément de contact correspondant (25), une ligne de connexion est enrobée dans le disque terminal de stator (10).

7. Moteur à collecteur selon la revendication 6, **caractérisé en ce que** la ligne de connexion est réalisée en forme d'une grille découpée.

8. Moteur à collecteur selon l'une quelconque des revendications précédentes, **caractérisé en ce que** le disque terminal de stator (10) présente un logement (30) pour un thermo-contrôleur (31) dans le rond d'induit et/ou une attache (32) pour un thermo-contrôleur en tant que capteur de température dans l'espace d'air entre le rotor (47) et l'empilage de tôles de stator (2).

9. Moteur à collecteur selon l'une quelconque des revendications précédentes, **caractérisé en ce que** le terminal de raccordement (11) est formé d'une seule pièce sur le disque terminal de stator (10).

10. Moteur à collecteur selon l'une quelconque des revendications précédentes, **caractérisé en ce que** sur le disque terminal de stator (10), des pièces de support d'enroulement (16, 17) sont formées d'une seule pièce aux positions des pôles du stator (3, 4) pour le maintien des bobines de pôle (5, 6).

11. Moteur à collecteur selon l'une quelconque des revendications précédentes, **caractérisé en ce qu'**au moins un des éléments de raccordement (24) est réalisé comme fiche plate (35, 42, 43, 44, 45, 46) ou comme raccord à borne guillotine ou crochet soudé (38, 39, 40, 41).

12. Moteur à collecteur selon la revendication 11, **caractérisé en ce que** les éléments de raccordement (24) pour le raccordement de fils d'enroulements statoriques (51, 52, 53, 531, 532, 61, 62, 63, 631, 632) sont réalisés comme crochets soudés (38, 39, 40, 41) et/ou **en ce que** l'élément de raccordement (24) destiné au raccordement du composant (13, 14, 15, 31) est réalisé comme fiche plate (35, 42, 44, 45, 46).

13. Moteur à collecteur selon l'une quelconque des revendications précédentes, **caractérisé en ce que** chacun des éléments de raccordement (24), avec son élément de contact respectivement correspondant (25), est réalisé en forme d'un insert métallique (23).

14. Moteur à collecteur selon la revendication 13, **caractérisé en ce que** l'insert (23) est réalisé de manière à ce que l'élément de raccordement en forme d'un talon de raccordement (24) soit relié à son élément de contact correspondant en forme d'une tige de contact (25) par l'intermédiaire d'un pont métallique (26).

15. Moteur à collecteur selon la revendication 13 ou 14, **caractérisé en ce que** les inserts (23) sont enrobés dans le terminal de raccordement (11).

16. Moteur à collecteur selon la revendication 13 ou 14, **caractérisé en ce que** le terminal de raccordement (11) est réalisé en deux parties pour l'insertion avec les inserts (23) et **en ce que** les deux parties (18, 19) peuvent être enclenchées entre elles au moyen d'éléments d'enclenchement et/ou être collées entre elles.

17. Moteur à collecteur selon l'une quelconque des revendications précédentes, **caractérisé en ce que** l'élément de contact (25), par rapport au disque terminal de stator (10), s'étend aussi bien du côté de l'élément de raccordement (24) que du côté détourné de l'élément de raccordement (24).

18. Moteur à collecteur selon la revendication 17, **caractérisé en ce qu'**aussi bien sur le côté frontal, détourné de l'empilage de tôles de stator (2), du disque terminal de stator (10) que sur le côté, tourné vers l'empilage de tôles de stator (2), une coque de connecteur (27, 28) est respectivement réalisée sur le terminal de raccordement (11) pour le logement alternatif de la fiche externe de connexion de moteur (48).

19. Moteur à collecteur selon la revendication 18, **caractérisé en ce qu'**au moins une des coques de connecteur (27, 28) est fermable par un couvercle de fermeture (29).
